(19) Europäisches Patentamt
European Patent Office
Office européen des brevets

(11) Publication number: 0 103 131 A2

# (12) EUROPEAN PATENT APPLICATION

(21) Application number: 83107553.6

(22) Date of filing: 01.08.83

(51) Int. Cl.³: **C 08 G 12/12**, C 08 G 12/38, B 29 J 5/02, B 32 B 21/02, B 32 B 27/04

(30) Priority: 10.09.82 US 416573
10.09.82 US 416574

(43) Date of publication of application: 21.03.84 Bulletin 84/12

(84) Designated Contracting States: BE DE FR GB IT LU NL

(71) Applicant: Borden, Inc., 180 East Broad Street, Columbus Ohio 43215 (US)

(72) Inventor: Williams, James H., 9120 Pinelake Drive, Louisville Kentucky 40220 (US)

(74) Representative: Cole, David John, Executive Liaison Services Romelie, Orchard Lane, East Molesey, Surrey KT8 OBN (GB)

## (54) Amino-formaldehyde resins and use thereof in lignocellulosic composites.

(57) Conventional amino-formaldehyde resins suffer from the serious disadvantage of excessive release of free-formaldehyde. This invention provides an amino formaldehyde resin having a formaldehyde to amino compound mole ratio of 1.1 to 1.2:1 which contains essentially no free formaldehyde, and which when cured contains substantially more methylene groups than methylene ether groups and which has very low free formaldehyde release. The resin is prepared by a two-stage process in which the first stage is conducted under acid conditions and the second stage under neutral conditions. The resins are useful, inter alia, in the manufacture of wood compositions, especially particleboard.

EP 0 103 131 A2

# AMINO-FORMALDEHYDE RESINS AND USE THEREOF IN LIGNOCELLULOSIC COMPOSITES

The present invention relates to amino-formaldehyde resins and to the use of such resins in lignocellulosic composites.

(In this application, unless otherwise stated, all parts and percentages are by weight and the term "mole ratio" unless otherwise specified refers to a mole ratio of formaldehyde to amino compound.)

Amino-formaldehyde resins, which comprise a condensation product of an amino compound, usually urea or a mixture of urea and melamine, with formaldehyde, are widely used in industry as, for example, textile finishing agents, in fertilizers, as coatings, as insulation and in paper manufacture. The resins are also used as adhesives and binders, particularly in the manufacture of lignocellulosic products such as particle board and plywood.

One problem with amino-formaldehyde resins, particularly when they are used in lignocellulosic composites and insulation foams, in both of which the cured resin has a very large surface area, is release of free formaldehyde from the resin. Numerous attempts have been made within the last few years to reduce such free formaldehyde emission, including coatings, chemical treatments before or after application of the resin and the use of resin additives. Experiments have also been conducted to determine whether variation of the formulation of the resin itself will affect free formaldehyde emission.

Lowering the molar ratio of formaldehyde to amino compound in amino-formaldehyde resins descreases free formaldehyde emission but hitherto has tended to weaken the internal bond strength of composites using the resin. The most common procedure for making amino-formaldehyde resins involves reacting the amino compound and formaldehyde under alkaline conditions followed by further heating under acidic conditions to resinify the product, then finally neutralizing and dehydrating to produce a product of the desired physical characteristics. This procedure requires the very active control of the pH in the different stages of the processes to prevent gelling of the resin and it is sometimes difficult to obtain consistant physical properties in the product. If one attempts to react formaldehyde and amino compounds under conditions of controlled acidity, the mass usually gels.

In a common commercial procedure for the manufacture of amino-formaldehyde resins, the amino compound and the formaldehyde are first reacted at a pH of about 7.5 to 8.9 to produce a solution having a formaldehyde:amino compound

molar ratio of 1.5-2.5:1. An acid is then added to reduce the pH to about 5.5 to 6.9 and the solution refluxed until a specific Gardner viscosity is obtained. Once the desired viscosity has been reached, the resin solution is neutralized to a pH of about 7.2 to 7.6 and an additional amino compound is added. Water is then removed under vacuum to product a prepolymer ready for commercial use and capable of being cured by the addition of acid. Prepolymers prepared by this process usually have a free formaldehyde content in the range of 0.5 to 1.8% but the free formaldehyde content may be as high as 5%, so that, at least in some application, such commercial resin still pose significant problems of free formaldehyde emission after curing.

There is thus a need for an amino-formaldehyde resin which, after curing, has low free formaldehyde emission but which in other respects has properties as good as the present commercially-available resins, and this invention seeks to provide such an amino-formaldehyde resin, together with a process for its preparation and a process for its use in forming lignocellulosic composites.

Accordingly, in one aspect this invention provides an amino-formaldehyde resin comprising the reaction product of an amino compound with formaldehyde; this resin has a formaldehyde to amino compound mole ratio of 1.0 to 1.2:1, contains essentially no free formaldehyde and, when cured, contains substantially more methylene groups than methylene ether groups.

In another aspect this invention provides a process for preparing an amino-formaldehyde resin. This process starts from an aqueous formaldehyde solution having a pH of from 0.5 to 2.5. To this formaldehyde solution is added incrementally an amino compound capable of forming a resin with formaldehyde, the temperature of the solution being maintained within the range of 50° to 70°C while the amino compound is added and the addition of the amino compound being continued until the mole ratio of formaldehyde to amino compound in the solution is in the range of 2.9 to 3.1:1 and the solution has a Gardner viscosity in the range of T+ to V+. Thereafter, the resultant reactant mixture is neutralized and a further quantity of the amino compound is added to the reaction mixture to achieve a formaldehyde to amino compound mole ratio of 1.0 to 1.2:1, thereby producing a hydrolytically stable amino-formaldehyde resin.

Finally, the invention provides a process for adhesively securing a first item to a second item in which a curable amino-formaldehyde resin of the invention or prepared by the process of the invention is disposed between the first and second items and is cured to adhesively secure the two items together.

The preferred amino compound for use in the resins and processes of this invention is urea. However, other amino compounds may also be used, for example melamine, methyl urea, 1,3-dimethyl urea and ethyl urea. If used, such other amino compounds preferably only replace part of the urea i.e. they are preferrably employed in admixture with urea.

In the amino-formaldehyde resins of this invention, the formaldehyde to amino compound mole ratio is preferably substantially 1:1; by substantially 1:1 is meant a mole ratio of 0.99 to 1.01:1.

The resins of this invention appear to have a different skeletal chemical structure as compared with prior art amino-formaldehyde resins. When cured, the resins contain substantially more methylene groups than methylene ether groups. As a result, the resins are more stable and emit less formaldehyde than prior art resins although their other properties are comparable to those of prior art resins. Furthermore, the amino-formaldehyde resins of this invention contain essentially no free formaldehyde and are, at least in most cases, hydrolytically stable.

Those skilled in the field of amino-formaldehyde resins are aware that the reactions which occur during the formation of such resins are of two kinds. Under the alkaline conditions used in the first stage of the prior art two-stage process described above, formaldehyde reacts with the amino compound to produce a methylolamino compound according to the following equation:

$$-NH_2 + CH_2O \longrightarrow -NH-CH_2-OH \quad (1)$$

In the second stage of the prior art 2-stage process, under acidic conditions, condensation occurs between the methylol groups to form dimethylene ether bridges:

$$-NH-CH_2-OH + HO-CH_2-NH- \longrightarrow -NH-CH_2-O-CH_2-NH- + H_2O \quad (2)$$

The methylol groups can also react with the amine hydrogens of the amino compound or the methylol amino compound to form methylene bridges:

$$-NH-CH_2-OH + NH_2- \longrightarrow -NH-CH_2-NH- + H_2O \quad (3)$$

$$-NH-CH_2-OH + HN-CH_2-OH \longrightarrow -NH-CH_2-N-CH_2OH + H_2O \quad (4)$$

Thus, the uncured amino-formaldehyde prepolymers contain terminal methylol groups, methylene bridges and dimethylene ether bridges. When the prepolymer is cured it is believed (although the invention is in no way limited by this belief) that some of these terminal groups and bridges persist into the cured polymer and that it is largely the dimethylene ether bridges and the terminal methylol groups which are responsible for the susceptibility of prior art amino-formaldehyde resins to hydrolysis e.g. by exposure to moisture in the lignocellulosic material which the resin is

employed to bind. Since methylene bridges are less susceptible to hydrolysis than dimethylene ether bridges, which are in turn less susceptible to hydrolysis than terminal methylol groups, the prepondurance of methylene groups, as compared with methylene ether groups, in the resins of this invention reduces hydrolysis in the resins and hence their free formaldehyde emission. Since, in addition, the resins of this invention contain essentially no free formaldehyde, the other major source of formaldehyde emission, their free formaldehyde emission is very low.

Desirably, the resins of this invention, when cured, contain more than 2, and preferably at least 2.5 methylene groups per methylene ether group. Also, the resins of this invention are preferably essentially free of methylol groups.

As already mentioned, in the process of the invention for preparing amino formaldehyde resins, the amino compound is added incrementally to an aqueous formaldehyde solution having a pH of 0.5 to 2.5 while maintaining the temperature of the solution in the range of 50° to 70°C until the mole ratio of formaldehyde amino compound is in the range of 2.9 to 3.1:1 and the solution has a Gardner viscosity in the range of T+ to V+, and then the reaction mixture is neutralized and a further quantity of the amino compound added to give a final formaldehyde to amino compound mole ratio of 1.0 to 1.2:1, thereby producing the final resin. It is believed (although the invention is in no way limited by this belief) that conducting the initial reaction of formaldehyde and amino compound in a strongly acid environment, as opposed to the alkaline environment used in the first stage of the conventional two-stage process described above, contributes to increasing the ratio of methylene groups to methylene ether groups in the final resin, after the resin has been cured. Moreover, since the first stage of the preparative process of the invention is strongly exothermic, by controlling the rate at which the amino compound is added to the aqueous acid formaldehyde solution, the temperature can be maintained within the appropriate range without any external application of heat to the solution; the exothermic nature of the application also produces a desirable level of condensation between the amino compound and the formaldehyde. This ability to effect the condensation without external heating not only significantly reduces the energy consumption of the present process as compared with prior art processes, but also reduces the cycle time required by 30% or more as compared with prior art processes.

Desirably, the amino compound, especially urea, is added to the acid aqueous formaldehyde solution in 15 equal increments; the time periods between increments may be controlled by observing the temperature of the reaction mixture and keeping

it in the desired range of 50° to 70°C, or alternatively equal increments of the amino compound can be added at equal time intervals. Preferably the pH of the aqueous acid formaldehyde solution is maintained at 1.0 during the addition of the amino compound. Adjustment of the pH may be effected using any inorganic or organic acid which will achieve the desired pH and will not otherwise interfere with the condensation reaction. Examples of suitable acids include formic acid, hydrochloric acid, sulfuric acid and p-toluene sulfonic acid; mixtures of two or more of these acids may of course be used. The preferred acid is sulfuric acid. If necessary, additional acid may be added to the formaldehyde solution during the addition of the amino compound to maintain the pH at the desired value.

The aqueous acid formaldehyde solution used in the first stage of the preparative process of this invention preferably contains about 49.8% to about 50.2% of formaldehyde. Although other formaldehyde solutions, such as the commercially-available 37% solution, can be used, 49.8-50.2% solutions are preferred because they yield a resin prepolymer (which may hereinafter be referred to as a "base resin") having a desirable solids content. If a different formaldehyde solution is used, the solids content can be adjusted by conventional techniques to the preferred value of about 63% as described below.

After all the amino compound has been added, the reaction mixture is desirably stirred until it achieves a Gardner viscosity within the range of T+ to V+. Thereafter, the reaction mixture is neutralized by the addition of any appropriate inorganic or organic base; neutralization is desirably effected to a pH of 7.2 to 7.5. Examples of suitable bases include sodium hydroxide, ammonia, triethanolamine and triethylamine; combinations of two or more of these bases may of course be used and the preferred base is a mixture of sodium hydroxide and triethylalamine. In a particularly embodiment of the invention, the reaction mixture is neutralized to a pH of 7.3 to 7.5 using a 50% solution of sodium hydroxide or triethylalamine. Following neutralization, a further quantity of the amino compound is added to the reaction mixture to produce the formaldehyde to amino compound mole ratio of 1.0 to 1.2:1; as already mentioned, the preferred mole ratio is 1:1. Once this final quantity of amino compound has been added, the reaction mixture is desirably stirred, preferably for at least 30 minutes. This completes the formation of the amino-formaldehyde prepolymer, which is then ready for use.

In a particularly preferred embodiment of the preparative process of the invention, the reaction mixture is made up using 49.78 parts by weight of the

preferred formaldehyde solution containing 49.8-50.2% by weight of formaldehyde (corresponding to 24.79 to 24.99 parts by weight of formaldehyde) and 49.78 parts by weight of urea. The particularly preferred reaction mixture further comprises 0.06 parts by weight of sulfuric acid and is neutralized with a mixture of 0.05 parts by weight of sodium hydroxide and 0.33 parts by weight of triethanolamine. The resultant base resin generally has a solids content in the range of 61 to 65% and a Westphal specific gravity of 1.250 to 1.270, preferably 1.262 to 1.270. The refractive index of the base resin is 1.4640 to 1.4645 and the Brookfield viscosity measured at 25°C, using a RVF viscometer with a No. 1 spindle at 20 RPM., is from 100 cps. to 400 cps.

Curing of the resins of the invention or the resins prepared by the preparative process of the invention may be effected in a number of different ways. The resins may be cured without the addition of acidic hardeners or catalysts, and when so cured the hydrolytic stability of the cured resin is enhanced, and its free formaldehyde emission thus reduced. A preferred technique for curing the resins without an acidic hardener comprises heating the resin at a pH of 7.2 to 7.5 to a temperature of 135° to 193°C. Alternatively, curing of the resins of the invention can be effected with an acidic hardener, any of the conventional hardeners useful for curing amino-formaldehyde resins being useful for this purpose.

External catalysts may also be employed to catalyze the curing of the resins of the invention. Suitable external catalysts include ammonium sulfate and ammonium chloride. The external catalyst is conveniently added to the resin just prior to appliction of the resin to the substrate, and the optimum amount of external catalyst will normally not exceed about 5 parts by weight for each 100 parts by weight of resin solids.

Also, there may be added to the resins of the invention, a cross-linking agent. The use of such cross-linking agents is especially desirable since the resins of the invention develop, under some curing conditions, physical properties that are not as desirable in respects other than free formaldehyde emission as the properties of prior amino-formaldehyde resins having a higher formaldehyde:amino compound mole ratio. The use of a cross-linking agent leads to a stiffer, stronger, tougher cured resin. The preferred resins of the invention having a formaldehyde:amino compound molar ratio of 1:1 may be assumed to be linear molecules, while even the resins of the invention having a slightly higher molar ratio will contain relatively few crosslinks. A linear resin, or the linear portions of a lightly cross-linked resin, has three potential reactive sites available for chemical cross linking, namely the

carbonyl and nitrogen sites of amide groups and the hydroxyl function of methylol groups. Of course, the carbonyl group is the least reactive of these three sites.

Although many cross-linking agents capable of reacting with one or more of these three sites are available and can be used, the preferred cross-linking agents are those containing at least two functional groups per molecule of the formula:

$-N-CH_2-O-R$

wherein R is an alkyl or hydroxyalkyl group of 1 to 24 carbon atoms, and preferably a lower alkyl group. Examples of suitable cross-linking agents of this type include those of the formula:

$$CH_3-(O-CH_2-NH-\overset{O}{\overset{\|}{C}}-NH-CH_2)_n-O-CH_3$$

Where n is an integer from 1 to 6 (these cross-linking agents are of course methoxylated urea-formaldehyde resins); dimethoxymethyldihydroxyethylene urea; tetraethoxymethylglycoluril; dibutoxymethyl urea; 5-ethyl-1-aza-3,7dioxabicyclo-[3,3,0] octane; and 5-hydroxymethyl-1-azo-3,7-dioxabicyclo[3,3,0] octane. A particularly preferred group of cross-linking agents are the methoxylated methylmelamines, especially trimethoxymethylmelamine and hexamethoxymethylmelamine. Trimethoxymethylmelamine is commercially available from American Cyanamid Company under the trademark Aerotex M-3, and from Borden, Inc., 180 E. Broad Street, Columbus, OH 43215, United States of America under the trademark CASCOMEL PR-601. Resin formulations containing methoxylated methylmelamines are often stable indefinitely in the absence of a catalyst, and show very good stability in the presence of normal amounts of acid catalyst. This stability in the presence of acid catalysts is important since in many application of the resin it is conventional practice to add the acid catalyst to the resin prior to applying the resin to the substrate, such as wood particles.

Methoxylated methylmelamines unfortunately have limited solubility in water, this solubility decreasing with increasing methoxylation. Also, certain other cross-linking agents may have limited water solubility. When using such relatively water-insoluble cross-linking agent, it is desirable to employ a surfactant to disperse the cross-linking agent. The surfactant used should be one having a high solubility and surface activity in aqueous solutions, for example a sodium salt of an alkyl diphenyloxide sulfonic acid, such as the commercial product sold by Dow Chemical Co. under the trademark Dowfax 2A1.

The cross-linking agent is normally added to the base resin just prior to application of the resin to the substrate on which it is to be employed. The optimum

amount of cross-linking agent is usually not more than 10 parts by weight per 100 parts by weight of base resin.

The resins of the invention may also be formulated with a physical modifying agent, for example amorphous silica. The addition of a physical modifying agent gives some of the same advantages as the use of a cross-linking agent, giving increased strength to the resin when cured.

The resins of the invention may be used for any of the purposes for which amino-formaldehyde resin have hitherto been used. However, as already mentioned they are especially useful for adhesively securing items together. In particular, they are especially useful for adhesively securing together a multitude of particles of lignocellulosic material to form a lignocellulosic composite, such as a plywood, fiberboard, particleboard, hardboard or similar material which has low free formaldehyde emission.

The techniques used for forming the lignocellulosic (commonly referred to as wood) composites of the invention may be any of the techniques known in the field. For example, the particles to be bonded together may be in the form of wood flakes, fibers, shavings or any combination of these forms. The process for bonding the particles together to form the composite may be for example a dry composition board process in which raw wood is broken down to a fiberous form, sprayed with the resin of the invention and formed into a mat by a sifting or dry forming technique, then subjected to elevated temperature and pressure to form the composition board. Alternatively, the process may be of the extrusion type in which a mixture of wood particles, the resin and (optionally) a wax is forced through a die to make a flat board. The resins of the invention may also be used in the so-called wet processes in which a slurry of wood fibers is drained on a screen to form a wet mat which is then cut into the desired panel size for curing. Although in theory such wet processes can be used to make panels without the addition of any resin, in practice it is often desirable to have a small amount of resin to improve the bonding properties of the product.

One preferred type of wood composite in which the resins of the invention may be employed is particleboard. In the manufacture of particleboard, an aqueous solution of the resin is sprayed onto wood particles (which may be flakes, fibers or mixtures of these forms), usually in an amount of about 6 to about 10 parts of resin solids per 100 parts of dry wood. The resin-treated particles are then formed into a mat and compacted in a hot press to a specific gravity in the range of about 0.561 to 0.721. Typically the thickness of the particleboard is in the range of 3 to 51 mm.

Commonly, the mat used to make fiberboard is made of multiple layers. Typically, three forming heads are used to form the mat. Each head effecting the placement of a single layer of material onto a moving wire or caul plate. The first forming head lays down a fine surface material, the second a coarser material for the center layer of the board, and the third another layer of fine surface material. Also, some modern processes use a press equipped not only with hot platens but also radio frequency heating to permit rapid curing with minimum press time. This process for the manufacture of fiberboard is quite versatile. Materials that would otherwise be waste, for example planer shavings, can be formed into useful fiberboard, either alone or in combination with other wood particles.

Whatever the type of lignocellulosic composite is being produced using a resin of the invention, it is of course highly desirable that the resin be dispersed as uniformly as possible throughout the composite and this is conveniently effected by spraying the resin onto the composite. Desirably, the amino-formaldehyde resin is sprayed onto the particles to produce a layer of resin having a thickness of from 0.125 to about 1.9 mm., the optimum thickness depending of course upon the intended end use of the wood particles. Those skilled in this field are aware of various spraying techniques which may be employed; for example spraying of the resin may take place in a centrifugal type blender or in a blow-line blender. The optimum amount of resin depends upon the characteristics required in the final lignocellulosic composite. For a high grade insulation board, the amount of resin used may be up to 5% by weight resin solids bases on dry finished board weight and would generally be in the range of about 2 to about 4%. On the other hand, to produce a high quality particleboard, the amount of resin should normally be sufficient to provide about 6% to about 10% dry resin solids based on the dry weight of the wood employed. In a multi-layered particleboard, it is often desirable to use a larger amount of resin in the surface layers than in the core layer; for example typically optimum results may be obtained using 6% of resin solids in the core and 10% of resin solids in the two surface layers. The larger amount of resin in the surface layers imparts added strength and hardness to these layers as compared with the core. Although more than 10% of resin solids can be used, in practice it is found that the use of a larger amount of resin is not cost-effective.

The wood particles employed in manufacturing particleboards and other wood composites have an affinity for water and a tendency to absorb it. Wood absorbed into the composite tends to weaken it, cause disorientation of certain fibers and decreases the dimensional stability of the composite. To prevent these undesirable

effects, it is preferred to apply a wax to the wood particles to give them resistance to water absorption. Those skilled in the art are aware of various types of wax, for example crude scale wax or microcrystalline wax, which may be used for this purpose. The optimum amount of wax is usually about 5% to about 15% and preferablyabout 10%, of the weight of the resin, or from about 0.5% to about 1.5% of the weight of the wood particles themselves.

When using the resins of the invention to produce wood composites by a process which involves hot pressing, the hot pressing conditions will of course depend upon the thickness of the composite, the resin characteristics and the presence or absence of a catalyst and/or cross-linking agent in the resin formulation. Typically, in a conventional hot platen press without radio frequency heating, producing a particle board 38 mm. thick and having a specific gravity of 0.40 may require a cycle time of 25 to 30 minutes, while producing a particle board half as thick will only require a cycle time of about 4 to 6 minutes at a press platen temperature of about 163°C. Using a combination of hot platens and radio frequency heating, much more rapid curing occurs so that less press time is needed; for example, the aforementioned 38 mm. board can be produced with a cycle time of about 3 minutes.

To sum up, the resins of this invention are chemically different from those of the prior art and because of their different chemical structure have essentially no free formaldehyde and the release of formaldehyde from the cured resin over a period of time is greatly reduced, while there is less odor during curing in a hot pressing process. The resins of the invention will cure without the addition of acidic hardness thereby minimizing acid hydrolysis in the cured resin, while the uncured resin exhibits hydrolytic stability and a consequently reduced formaldehyde emission. Preferred uncured resins of the invention have a storage life of several months even at elevated temperature of up to 32.2°C. Furthermore, the resins can be produced by a process with low energy consumption and a relatively short 3 to 4 hour cycle time, in yields which are essentially 100%. Finally, despite the advantages of low free-formaldehyde emission and consequently extremely low odor, the resins of the invention can be made having other properties as good as or better than, prior art resins used in making lignocellulosic composites.

The following examples are now given, though be way of illustration only to show details of particularly preferred resin, processes for their preparation and processes for their use in forming wood composites of the invention.

Example 1

Preparation of Urea-Formaldehyde Base Resins

(A) An aqueous formaldehyde solution was assayed and found to contain 50% formaldehyde. 49.78 g. (0.83 moles) of this formaldehyde solution were charged to a reactor and agitation and stirring were initiated. The pH of the formaldehyde solution was adjusted to pH 1.0 using sulfuric acid and its temperature raised to 50°C. 16.93 G. (0.282 moles) of prilled urea was then charged into the formaldehyde solution in 15 equal increments over a 15 minute time period in such a manner to maintain its temperature between 50°C and 70°C. The formaldehyde:urea mole ratio at this stage was 2.9:1.

Thereafter, the reaction mixture was stirred for 15 minutes to a Gardner viscosity of "T+", then its pH was raised to 7.2 by the addition of 0.05 g. of a 50% sodium hydroxide solution and the necessary amount of triethanolamine. A final charge of 32.85 g. (0.548 moles) of prilled urea was added to the reaction mixture, its pH readjusted to 7.2 with triethanolamine and stirring was continued for 30 minutes. The reaction was then complete.

The urea-formaldehyde base resin was analyzed and found to have the following composition inweight percent: 24.89% formaldehyde, 49.78% urea, 0.06% sulfuric acid, 0.05% sodium hydroxide, and 0.33% triethanolamine, with the remainder being water. The base resin contained essentially no free formaldehyde, i.e. no formaldehyde was detectable after 24 hours. The storage life of the base resin was determined to be: 10 days at 37.8°C; 60 days at 32.2°C; 120 days at 21.1°C; and 180 days at 10°C. The base resin had a solids content of 62.52% and a mole ratio of 1:1.

(B) The above procedure was followed except that the urea increments were added at the rate of one every minute. After the fifteenth addition, the temperature of the reaction mixture was 80°C. All other conditions were identical. The final base resin had a solids content of 63.93% and a molar ratio of 1:1.

(C) The above procedure was followed except that 24.6 g. (0.410 moles) of urea were added in the final charge. The final base resin had a molar ratio of 1.2:1 and a solids content of 63.28%.

Example 2

Comparative Demonstration of Resin

Structure

A urea-formaldehyde base resin prepared according to Example 1(A) was compared with a conventional commercial liquid base resin having a F/U mole ratio

of 1.3:1, prepared by conventional techniques, i.e. alkaline condensation and acid treatment. In addition, each liquid base resin was cured by the addition of ammonium chloride in an amount of 2% and heating at 115°C for fifteen minutes. The cured resins were cooled and ground to through 100 mesh size particles prior to analysis.

The total formaldehyde, free formaldehyde oxidizable formaldehyde and methylol contant were determined for each of the liquid and cured resins using conventional techniques. (Oxidizable formaldehyde equals free formaldehyde plus the content of both methylol and methylene ether functional groups.) The methylene ether content was then calculated by subtracting the methylol content from the oxidizable formaldehyde content and the methylene content by subs-tracting both free formaldehyde and oxidizable formaldehyde in the resin from total formaldehyde used to prepare the resin. The results are shown in Table I below.

TABLE I

| | Base Resin (1.0 F/U Mole Ratio) | | Conventional Resin (1.3 F/U Mole Ratio) | |
|---|---|---|---|---|
| | Liquid | Cured | Liquid | Cured |
| Total Formal-dehyde | 23.18% | 32.56% | 28.86% | 42.08% |
| Oxidizable Formaldehyde | 16.73% | 9.14% | 21.17% | 19.85% |
| Free Formaldehyde | — | — | 0.15% | — |
| Methylol | 11.84% | — | 12.65% | 1.19% |
| Methylene | 6.45% | 23.42% | 7.64% | 22.23% |
| Methylene Ether | 4.89% | 9.14% | 8.37% | 18.66% |

Table I shows that, in both the liquid and cured states, the conventional resin has much more methylene ether functionality than the resin of the invention.

The results in Table I are expresed as percentages of the total weight of either the liquid or the cured resin. Since the F/U mole ratios in the resin of the invention and in the conventional resin are different, it is more meaningful to proportions of the various functional groups as a percentage of total formaldehyde content, as shown in Table II below.

TABLE II

| | Base Resin (1.0 F/U Mole Ratio) | | Conventional Resin (I.3 F/U Mole Ratio) | |
|---|---|---|---|---|
| | Liquid | Cured | Liquid | Cured |
| Free Formaldehyde | — | — | 0.52% | — |
| Methylol | 51.08% | — | 43.83% | 2.83% |
| Methylene Ether | 21.09% | 28.07% | 29.00% | 44.34% |
| Methylene | 27.83% | 71.93% | 26.65% | 52.83% |
| Total Formaldehyde | 100.00% | 100.00% | 100.00% | 100.00% |

Thus, resin of the invention has more methylol and methylene functional groups in the liquid state than the liquid conventional resin (51.08% and 27.83% versus 43.83% and 26.65%, respectively). After the liquid resins are cured, however, the methylene ether group content of the resin of the invention 21.09%, is small relative to its methylene content, 71.93%. The cured conventional resin, however, shows only a slightly higher methylene content, 52.83%, then methylene ether function content, 44.34%. In addition, the cured conventional resin contains 2.83% methylol groups.

Table II demonstrates that the new manufacturing procedure of the invention does change the chemical structure and skeleton of the resin as compared with the conventional resin. This change is reflected in the structural relationships which the cured base resin, which has more methylene groups than methylene ether groups, and even more than the sum of methylene ether plus methylol groups. The high degree of methylene functionality in the base resin not only contributes to its hydrolytic stability, but also to its low release of formaldehyde.

## Example 3

### Comparative Demonstration of Particleboard Production

Particleboard was prepared using the resin of Example 1(A) and compared to particleboard prepared using two conventional resins, Autoset 509 with a formaldehyde:urea mole ratio of 1.25:1 and Autoset 5251 with a mole ratio of 1.17:1. These two resins are regarded as low-fuming resins, i.e. have low emission of formaldehyde.

600 parts of each resin were sprayed onto 525 parts of Southern Yellow Pine Core Furnish (wood particles) (approximate oven dry (0.0) moisture content (M.C.)

5.7% -6.8% as determined by a Cenco Direct Reading Moisture Balance) by placing the wood particles in a rotary drum blender (measuring 122 cm. diameter by 61 cm wide), continuously tumbling, and spraying liquid resins with a spray nozzle producing a cone configuration pattern at approximately 48 kPa. atomizing pressure. The flow through the nozzle was at a rate of approximately 100 grams liquid resin/minute.

A wax emulsion (CASCOWAX EW-403E) was also applied at a rate of 0.75% wax solids/O.D. wood weight) prior to resin application with a separate pump, at a flow rate of 60 grams of liquid emulsion per minute and an atomizing pressure of 172 kPa. Boards were manufactured using the resin of the invention with external catalysis. The external catalyst (a 20% aqueous solution of ammonium sulphate) was added to the resin prior to spraying at a rate of 2.0 parts of ammonium sulphate per 100 parts of liquid resin.

For each experiment the quantity of wood particles used was large enough to manufacture six laboratory board samples 368 mm square and 15.9 mm. thick with an oven dry specific gravity of approximately 0.72. A mat was formed using the resin treated wood particles and a forming box prior to pressing. The laboratory boards were pressed between two aluminum cauls (3.2 mm thick x 457 mm x 559 mm.). Treated moisture content was determined on the Cenco Direct Reading Moisture Balance.

The press used was a single opening press with a 305 mm hydraulic ram. The total press cycles were either 3.75 minutes or 3.0 minutes in duration, and platen temperature was 171.1°C. The press was closed with increasing pressure from 5.345 mPa. on the mat with 15.9 mm stops until closure (no daylight) occures in approximately 1.0 to 1.5 minutes and then the pressure was reduced and held at 1.207 mPa. for the remainder of the cycle.

The boards (3 from each press cycle) were then cooled at room temperature. In the cooling process only 2 boards at each press cycle were stickered. The other boards (1 at each press cycle) were hot stacked and cut in half for special conditioning prior to testing.

The sample boards stickered for cooling were trimmed to 318 mm. square and cut into two 127 x 318 mm strips and one 51 x 318 mm strip. The two 127 x 318 mm strips were then cut into eight 127 x 70 mm samples for residual formaldehyde testing and the single 51 x 318 mm strip from each of the four stickered boards were cut into six 51 mm square samples for internal bond testing. The two single board samples (1 at each press cycle and hot stacked) were cut in half with one half going

into an oven at 62.8°C hot stacked for 48 hours (to accelerate any degradation in the resin bond) and the other half going into a humidity cabinet (stickered to get better conditioning) with conditions set at 48.9°C/70% relative humidity (R.H) for 96 hours (this heat/humidity conditioning accelerates any hydrolysis/bond degradation which may occur under extreme condtions in a factory situation). After this separate conditioning, the boards in the 48 hour dry heat hot stack were stickered and allowed to cool for 72 hours at 21.1°C/50% R.H. The boards exposed to heat/humidity were left stickered and allowed to cool for 48 hours at 21.1C/50% R.H. After cooling these boards were cut into twelve 51 x 51 mm. samples.

The boards manufactured were tested for oven dried density, internal bond strength (on the original - no conditioning; after a 48 hour dry heat hot stack at 62.8°C; and after a 96 hour heat/humidity), residual formaldehyde emissions according to the February 24, 1982 (United States) National Particleboard Association (NPA) sanctioned 2 hour. desiccator procedure, and a hydrolysis test used to determine any degradation in internal bonds after prolonged exposure to constant temperature and humidity.

The NPA sanctioned desiccator procedure was used to determine the amount of residual formaldehyde given off by particleboard and absorbed into a 25 ml sample of distilled water to give results in micrograms of formaldehyde per ml of water. The only modification to this method was the elimination of the 15 minute boil on the test tubes after the addition of the concentrated sulfuric acid to develop the colors prior to evaluation in the spectrophotometer. A study which compared the boil and non-boil conditions, revealed no significant change in color development with the omission of the boil, and this modification speeded up the procedure.

The samples measuring 127 x 70 mm were randomized at each of the specific press process conditions prior to being placed in the desiccator.

The density of the boards were determined after exposure to the desiccator method discussed above. Half of the 127 x 70 mm samples were used to determine the oven dried density of the board samples. Eight samples per condition were used to obtain an average value according to NPA test procedures 4.4.2 and 4.4.3. The moisture content was determined according to NPA procedure 4.5.

Internal bond samples, measuring 51 x 51 mm were tested in a Tinius Olson Universal Testing machine with a 10886 kg. load capacity. The internal bonds were tested according to procedure 4.7 of the NPA. Four original internal bond samples 51 x 51 mm. which were stickered after removal from the press and allowed to cool to room temperature, were tested first.

Eight additional 51 x 51 mm samples for each condition described above were cut and set aside for the following test. Four of these samples were conditioned for one week at 21.1°C/50% R.H. (or until a constant weight was obtained). Samples were then tested for internal bond and the results were compared against original internal bond values and the other four samples that are the same age, but were only exposed to 21.1°C/50% R.H. for the testing period. The following procedure for preparing the particleboard was followed for this example.

The test results from the 3.00 minute press cycle are shown in Table III and the results of the 3.75 minute press cycle are shown in Table IV.

TABLE III

(3.00 Minute Press Cycle)

| | Autoset 509 (Control) | Autoset 525 (Control) | Resin of Invention (No catalyst) | Resin of Invention (External Catalyst) |
|---|---|---|---|---|
| Resin Mole Ratio (F/U) | 1.25 | 1.17 | 1.00 | 1.00 |
| Wood particles Moisture Content (M.C.),% | 6.80 | 6.80 | 6.50 | 5.70 |
| Internal Catalyst | yes | yes | no | no |
| Treated wood particles Moisture Content | 12.00 | 11.50 | 10.90 | 11.50 |
| Physical Properties | | | | |
| Specific gravity, ovendried | 0.721 | 0.721 | 0.719 | 0.719 |
| Internal Bonds, mPa. No conditioning | 1.117 | 0.945 | 0.993 | 0.566 |
| 48 Hr. Dry Heat (62.8°C) | 0.938 | 0.738 | 0.683 | 0.566 |
| % Gain (Loss) to Original | (16.0) | (21.9) | (31.3) | (8.5) |
| 96 Hr. Heat/Humidity (48.9°C)/ 70% R.H. | 0.848 | 0.966 | 0.828 | 0.531 |
| % Gain (Loss to original) | (24.1) | 2.20 | (16.7) | (6.1) |

| | | | | |
|---|---|---|---|---|
| Residual Formaldehyde (2 Hr.) | | | | |
| Desiccator Value, $10^{-6}$ g/ml | 1.6 | 0.8 | 0.5 | 0.4 |
| M.C. Before % | 6.8 | 7.0 | 6.2 | 6.0 |
| M.C. After, % | 6.8 | 7.0 | 6.2 | 5.6 |

TABLE IV

(3.75 Minute Press Cycle)

| | Autoset 509 (Control) | Autoset 525 (Control) | Resin of Invention (No catalyst) | Resin of Invention (External catalyst) |
|---|---|---|---|---|
| Resin Mole Ratio (F/U) | 1.25 | 1.17 | 1.00 | 1.00 |
| Wood particles Moisture Content (M.C.),% | 6.80 | 6.80 | 6.50 | 5.70 |
| Internal catalyst | yes | yes | no | no |
| Treated wood particles moisture content | 12.00 | 11.50 | 10.90 | 11.50 |
| Physical Properties | | | | |
| Specific gravity, ovendried | 0.717 | 0.738 | 0.719 | 0.724 |
| Internal bonds, mPa No conditioning | 1.159 | 1.069 | 0.910 | 0.614 |
| 48 Hr. Dry Heat (62.8°C) | 0.876 | 0.697 | 0.779 | 0.435 |
| % Gain (Loss) to Original | (24.4) | (34.8) | (14.4) | (29.2) |
| 96 Hr. Heat/Humidity 48.9°C/ 70% R.H. | 0.917 | 0.841 | 0.904 | 0.545 |
| % Gain (Loss to Original) | (20.8) | (21.3) | (0.8) | (11.2) |
| Residual Formaldehyde (2 Hr.) | | | | |

| | | | | |
|---|---|---|---|---|
| Desiccator Value, $10^{-6}$g/ml | 1.4 | 0.8 | 0.5 | 0.4 |
| M.C. Before, % | 6.4 | 6.4 | 6.4 | 5.8 |
| M.C. After, % | 6.5 | 6.4 | 6.4 | 5.8 |

Table III shows that the catalyzed resin of the invention has a reduced formaldehyde emissions of only 0.4 x $10^{-6}$g/ml., approximately 50% lower than the value for the prior art 1.17 mole ratio resin (0.8 x $10^{-6}$g/ml). The uncatalyzed resin of the invention had slightly higher formaldehyde emission (0.5 x $10^{-6}$g/ml), but its internal bond strength was 0.428 mPa greater than that of the catalyzed resin of the invention.

In addition to its low-fuming character and high bond strength, the uncatalyzed resin of the invention has practical application to produce a durable urea-formaldehyde polymer bond. It is generally accepted that the durability of UF/wood bonds is limited by the hydrolytic susceptibility of the UF adhesive and that this is aggravated by the acidic cure catalysts employed in prior art resins. The uncatalyzed resin of the invention will, therefore, allow the manufacture of a hydrolytically stable particleboard with good bond strength, low residual formaldehyde and stability over time against possible acid hydrolysis.

Table IV shows that the 3.75 minute press cycle did not change the residual formaldehyde in the two resins of the invention. The range of residual formaldehyde was 0.3 to 0.6 x $10^{-6}$g/ml. The two prior art resins showed a slight reduction in formaldehyde emission as compared with the 3.00 minute press cycle. However, the 1.17 mole ratio resin had residual formaldehyde readings 60% greater than the uncatalyzed resin of the invention. The internal bond strength increased (as compared with the 3.00 minute press cycle) for all but the uncatalyzed resin of the inventionand this reduction was insignificant.

The heat degradation studies in Tables III and IV show a loss in internal bond strength in all cases except for the 1.17 mole ratio resin in the 96 hour test with a 3.00 minute press cycle. The uncatalyzed resin of the invention in both the 3.00 and 3.75 minute press cycles showed acceptable bond strengths of 0.828 and 0.904 mPa resepctively, and there is no evidence of potential heat degradation of the internal bonds.

A similar series of experiments were conducted to compare the resin of the invention prepared in Example 1(C) with the prior art Autoset 525 resin having a 1.17:1 mole ratio. The results, shown in Table V below, are similar to those shown in Tables III and IV above; in particular, the results in Table V, in the 3.00 minute press

cycle demonstrate a 24% reduction in formaldehyde emission for the resin of the invention ($0.44 \times 10^{-6}$g/ml versus $0.58 \times 10^{-6}$g/ml for the prior art resin).

TABLE V

| | Autoset 525 (Control) | Autoset 525 (Control) | Resin of Invention | Resin of Invention |
|---|---|---|---|---|
| Press Cycle (Min.) | 3.00 | 3.75 | 3.00 | 3.75 |
| Resin Mole Ratio (F/U) | 1.17 | 1.17 | 1.20 | 1.20 |
| Wood particles moisture content (M.C.),% | 3.70 | 3.70 | 4.00 | 4.00 |
| Internal catalyst | yes | yes | no | no |
| Treated wood particles moisture content | 8.30 | 8.30 | 8.80 | 8.80 |
| Physical Properties | | | | |
| Specific gravity, ovendried | 0.750 | 0.751 | 0.766 | 0.748 |
| Internal Bond strength mPa No conditioning | 1.145 | 1.055 | 0.538 | 0.724 |
| 48 Hr. Dry Heat (62.8°C) | 0.772 | 0.835 | 0.545 | 0.641 |
| % Gain (loss) to Original | (32.5) | (20.9) | 1.3 | (11.4) |
| 96 Hr. Heat/Humidity 48.9°C/ 70% R.H. | 0.724 | 0.793 | 0.324 | 0.552 |
| % Gain (Loss) to Original | (36.7) | (24.8) | (39.7) | (23.8) |
| Residual Formaldehyde (2 Hr.) | | | | |
| Desiccator Value, $10^{-6}$g/ml | 0.58 | 0.48 | 0.44 | 0.36 |
| M.C. Before,% | 4.70 | 4.20 | 4.60 | 4.10 |
| M.C. After,% | 4.80 | 4.20 | 4.70 | 4.20 |

Example 4

Use of TMMM as a Cross-Linking Agent

Various resin formulations were made up by mixing 80 parts of the resin prepared in Example 1(A) above, 0.008 parts of Dowfax 2A1 surfactant and varying amounts of trimethoxymethylmelamine (TMMM) until a homogeneous mixture was obtained. The resin formulations were then used to make particle specimens in the manner described in Example 3 above (except that press cycle times of 3.75 and 4.00 minutes were used) and the internal bond strength and formaldehyde emission of the specimens determined as described in that Example. The results are shown in Table VI below.

TABLE VI

| TMMM Parts, per 80 Parts of Liquid Base Resin | Internal Bond, mPa | Press Time, Minutes | Residual Formaldehyde (ug/ml) |
|---|---|---|---|
| 0 | 0.614 | 3.75 | 0.4 |
| 2.5 | 0.904 | 3.75 | 0.3 |
| 5.0 | 0.862 | 4.00 | 0.3 |
| 10.0 | 1.200 | 4.00 | 0.4 |
| 20.0 | 1.104 | 4.00 | 0.5 |

The data in Table VI demonstrate that trimethoxymethylmelamine is an effective cross-linking agent when used at 2.5 parts per 80 parts of resin and above.

Example 5

Use of Other Cross-Linking Agents

The same techniques employed in Example 4 above were used to evaluate two other cross-linking materials, namely hexamethoxymethylmelamine (HMMM) (Aerotex 3030 obtained from American Cyanamid) and a methylated urea-formaldehyde resin having the formula:

$$CH_3(-O-CH_2-\underset{H}{N}-\overset{O}{\overset{\|}{C}}-\underset{H}{N}-CH_2)_n-O-CH_3$$

where n = 1-6 (Beetle 60, obtained from American Cyanamid).

The resin used was that prepared in Example 1(A) above. The results of the evaluation are summarized in Table VII below.

TABLE VII

| Cross-Linking Agent | % Used | Press Time, Min. | Internal Bond, mPa. | Residual Formaldehyde, $10^{-6}$ g/ml |
|---|---|---|---|---|
| none | — | 3.75 | 0.662 | 0.3 |
| none | — | 3.00 | 0.766 | 0.3 |
| Hexamethoxymethylmelamine | 5.0 | 4.00 | 0.904 | 0.3 |
| Hexamethoxymethylmelamine | 5.0 | 3.25 | 0.745 | 0.3 |
| Hexamethoxymethylmelamine | 3.3 | 3.25 | 0.600 | — |
| Hexamethoxymethylmelamine | 33.3 | 3.25 | 0.662 | — |
| Methylated UF Resin | 20.0 | 3.25 | 0.517 | 1.6 |
| Methylated UF Resin | 20.0 | 4.50 | 1.000 | 1.63 |
| Methylated UF Resin | 3.0 | 3.25 | 0.538 | — |

The data in Table VII show that both HMMM and the methylated urea-formaldehyde resin are effective cross-linking agents. As expected, both the press cycle and the amount of cross-linking agent directly affect the internal bond strength attainable.

## Example 6

## Particleboard Production Using Cross-Linking Agents

Since the preliminary experiments in Examples 4 and 5 above had shown that the use of cross-linking agents produces cured resins with higher internal bond strength, further experiments were conducted to investigate the properties of particleboard produced using resins of the invention with cross-linking agents and with prior art resins.

### (A) Use of TMMM as Cross-Linking Agent

Parts of the urea-formaldehyde base resin prepared Example 1(A) and containing 63% solids was mixed with 15 parts of trimethoxymethylmelamine (TMMM) and 0.6 parts of Dowfax 2Al surfactant. The mixture was mechanically stirred until a homogeneous resin formulation was obtained.

A second similar formation was also prepared but with an external catalyst. 600 parts of the resin were thoroughly mixed with 15 parts of TMMM and 0.6 parts of

Dowfax 2A1. After a homogeneous resin was obtained, a formulation was prepared containing 10 parts of a 20% ammonium chloride per 100 parts of resin.

Two similar resin formulations were prepared without the TMMM.

The resulting resin formulations were each sprayed onto 5010 parts of Southern Yellow Pine core containing approximately 6.0% moisture. Otherwise the preparation of the particleboard specimens and the testing thereof were conducted in the same manner as in Example 3 above. The results are shown in Table VIII below.

TABLE VIII

| | Uncatalyzed Resin of the Invention | Externally Catalyzed Resin of the Invention | Uncatalyzed Resin of the Invention | Externally Catalyzed Resin of the Invention |
|---|---|---|---|---|
| Wood particle moisture content, % | 6.5 | 5.7 | 6.0 | 6.3 |
| External catalyst, Pts/100g Resin | — | 2.0 | — | 2.0 |
| Treated Wood particle moisture content | 10.9 | 11.5 | 11.0 | 12.2 |
| TMMM, % (based on liquid resin | 0 | 0 | 2.5 | 2.5 |
| Physical Properties (3.75 Minute Press Cycle) | | | | |
| Specific gravity, overdried | 0.719 | 0.724 | 0.732 | 0.722 |
| Internal Bond, strength, mPa | 0.910 | 0.614 | 1.166 | 0.904 |
| Residual formaldehyde | | | | |
| Desiccator value, $10^{-6}$g/ml | 0.5 | 0.4 | 0.5 | 0.4 |
| M.C. Before, % | 6.3 | 5.9 | 5.0 | 5.5 |
| M.C. After, % | 6.4 | 5.9 | 5.1 | 5.6 |
| Physical Properties (3.00 Minute Press Cycle) | | | | |
| Specific gravity, ovendried | 0.719 | 0.703 | 0.727 | 0.735 |
| Internal bond, strength, mPa | 0.993 | 0.566 | 1.055 | 0.835 |

| | | | | |
|---|---|---|---|---|
| Residual Formaldehyde | | | | |
| Desiccator value, $10^{-6}$ g/ml | 0.5 | 0.4 | 0.5 | 0.4 |
| M.C. Before, % | 6.2 | 6.0 | 5.8 | 5.8 |
| M.C. After, % | 6.2 | 6.1 | 5.8 | 6.1 |

Comparison of the boards made from the same materials by the same methods, except that the external catalyst was omitted, shows that in all cases, the internal bond strengths with the cross-linking agents were greater than those without the agent (compare Table VIII with Table V above). In addition, the uncatalyzed boards with cross-linking agent have higher internal bond strength than the externally catalyzed boards. For example, the internal bond strength for the 3.00 minute press cycle uncatalyzed resin was 1.055 mPa, whereas, the corresponding externally catalyzed resin had a bond strength of only 0.835 mPa. In the 3.75 minute press cycle, the corresponding results were 1.166 and 0.904 mPa. respectively. No change was seen in residual formaldehyde.

The effect of the trimethoxymethylmelamine is most evident at the 3.75 minute press cycle. The values for internal bond strenght (I.B.) increase from 0.910 to 1.166 mPa or 28% for the uncatalyzed resin and from 0.614 to 0.904 mPa or 47% for the catalyzed resin.

(B) Comparison of TMMM and HMMM as Cross-Linking AGents

TMMM was compared with hexmethoxymethylmelamine (HMMM). 1,200 parts of the urea-formaldehyde resin prepared in Example 1(A) and containing 63% solids were mixed with 60 parts of either TMMM or HMMM and 1.2 parts of Dowfax 2A1, thorough mixing being continued until a homogeneous mixture was obtained. Each mixture was divided into two equal parts and 60 parts of a 20% ammonium chloride solution was added to one as an external catalyst. The remaining half was used as an uncatalyzed resin.

The four adhesive formulations were each sprayed onto 5025 parts of Southern Yellow Pine core, and particleboard specimens formed therefrom and analyzed as in example 3 above. This series of experiments also included heat degradation studes conducted in the same manner as in Example 3 above. The results are shown in tables IX and X below.

TABLE IX

(3.00 Minute Press Cycle)

| Cross Linking Agent | TMMM | TMMM | HMMM | HMMM |
|---|---|---|---|---|
| Wood particle moisture content, % | 6.2 | 6.2 | 6.7 | 6.8 |
| External catalyst, solids, g/100g resin | — | 2.0 | — | 2.0 |
| Treated wood particles moisture content | 11.5 | 12.1 | 12.4 | 13.4 |
| Physical Properties | | | | |
| Specific gravity, ovendried | 0.726 | 0.740 | 0.719 | 0.719 |
| Internal bond strength mPa. No conditioning | 0.966 | 0.697 | 0.745 | 0.614 |
| 48 Hr. Dry Heat (62.8°C) | 0.862 | 0.738 | 0.800 | 0.752 |
| % Gain (Loss) to Original | (10.7) | 5.9 | 7.4 | 22.5 |
| 96 Hr. Heat/ Humidity 48.9°C 70% R.H. | 1.090 | 0.821 | 0.780 | 0.552 |
| % Gain (Loss) to Original | 12.9 | 17.8 | 4.6 | (10.1) |
| Residual Formaldehyde | | | | |
| Desiccator Value, $10^{-6}$ g/ml | 0.5 | 0.4 | 0.7 | 0.5 |
| M.C. Before, % | 6.0 | 6.2 | 6.5 | 6.6 |
| M.C. Ater, % | 6.0 | 6.3 | 6.5 | 6.6 |

In Table IX, using the 3.00 minute press cycle, both the catalyzed and uncatalyzed base resin formulated with 5% TMMM gave greater internal bond strengths and lower residual formaldehyde in the final boards. The results were mixed in the 3.75 minute press cycle (Table X). The HMMM uncatalyzed base resin had a slightly greater bond strength (1.193 mPa) than the corresponding TMMM resin (1.124 mPa). When the HMMM cross-linked resin was externally catalyzed, however, the internal bond strength results were lower than the TMMM modified resin, the values being 0.855 and 1.076 mPa respectively.

The results in Tables IX and X show that heat degradation is not a problem. In fact, there is an increase in internal bond strength in three of the four boards made with the 3.00 minute press cycle. The 3.75 minute cycle in some cases showed a slight loss in interal bond strength with a range of up to 15.3% for the 96 hour period. These losses are minimal, however, and are not expected to affect the performance of the manufactured board.

## Example 7

### Identification of Additional Cross-Linking Agents

A boiling water gel (BWG) test method was used to screen potential cross-linking agents prior to the actual board manufacture. The reactivity of the resin was tested under controlled conditions by observing the increase in viscosity until gelation occurs.

The resin, a catalyst if used, and the cross-linking agent were mixed and the resultant mixture held at 21.1°C for 10 minutes. Four mls. of the resin mixture were then poured into each of three test tubes. A test tube was placed in boiling water that was deep enough to be slightly above the level of the resin in the tube. A timer was started and the resin was continually stirred with a small stick or glass rod until the resin set. The BWG is the time elapsed between placing the tube in the boiling water and setting up of the resin. The BWG given was the average of the three samples, and an average value between 60 and 180 seconds was found to be an acceptable guideline for screening potential cross-linking formulations as determined for HMMM and TMMM.

Several compounds other than TMMM and HMMM were tested with the BWG procedure and found to be acceptable cross-linking agents. These were:

$CH_3\text{-}(O\text{-}CH_2\text{-}NH\text{-}\overset{O}{\overset{\|}{C}}\text{-}NH\text{-}CH_2)_n\text{-}O\text{-}CH_3$ where n=1-6, dimethoxymethyldihydroxyethylene urea, tetraethoxymethylglycoluril, dibutoxymethylurea, 5-ethyl-1-aza-3,7-dioxabicyclo[3,3,0] octane and 5-hydroxymethyl-1-aza-3,7-dioxabicyclo[3,3,0] octane.

CLAIMS

1. An amino-formaldehyde resin comprising the reaction product of an amino compound with formaldehyde and characterized in that the resin has a formaldehyde to amino compound mole ratio of 1.0 to 1.2:1, contains essentially no free formaldehyde and, when cured, contains substantially more methylene groups than methylene ether group.

2. A resin according to claim 1 characterized in that the amino compound comprises urea.

3. A resin according to either of the preceding claims characterized by a formaldehyde to amino compound mole ratio of substantially 1:1.

4. A resin according to any one of the preceding claims characterized in that, when cured, it is essentially free of methylol groups.

5. A process for preparing an amino-formaldehyde resin characterized by:

preparing an aqueous formaldehyde solution having a pH of from 0.5 to 2.5;

adding incrementally to the formaldehyde solution an amino compound capable of forming a resin with formaldehyde, while maintaining the temperature of the solution within the range of 50° to 70°C, until the mole ratio of formaldehyde to amino compound in the solution is in the range of 2.9 to 3.1:1 and the solution has a Gardner viscosity in the range of T+ to V+;

neutralizing the resultant reaction mixture; and

adding a further quantity of the amino compound to the reaction mixture to achieve a formaldehyde to amino compound mole ratio of 1.0 to 1.2:1, thereby producing a hydrolytically stable amino-formaldehyde resin.

6. A process according to claim 5 characterized in that the reaction mixture is neutralized to a pH of 7.2 to 7.5

7. A process according to claim 5 or 6 characterized in that the final resin is as claimed in any of claims 1 to 4.

8. A process according to any of of claims 5 to 7 characterized in that the final resin is thereafter cured by heating the resin at a pH of 7.2 to 7.5 to a temperature of 135° to 193°C.

9. A process according to any one of claims 5 to 8 in that the resin is cured in the presence of a cross-linking agent containing at least two functional groups per molecule of the formula

$-N-CH_2-O-R$

wherein R is an alkyl or hydroxyalkyl group of 1 to 24 carbon atoms.

10. A process for adhesively securing a first item to a second item using a curable amino-formaldehyde resin comprising disposing between the first and second items a curable amino-formaldehyde resin, and curing this resin to adhesively secure the two items together, characterized in that the amino-formaldehyde resin used is a resin as claimed in any one of claims 1 to 4 and/or prepared as claimed in any one of claims 5 to 7.

11. A process according to claim 10 characterized in that curing of the resin is effected in a manner as claimed in claim 8 or 9.

12. A process according to claim 10 or 11 characterized in that the items secured together are a large number of particles of lignocellulosic material and in that these particles are consolidated under heat and pressure during the curing of the resin, thereby producing a pressed composite of lignocellulosic material bound together by a urea-formaldehyde binder.